# EUROPEAN PATENT APPLICATION

(11) **EP 4 398 480 A1**
(43) Date of publication of application: **10.07.2024**
(21) Application number: 22862966.3
(22) Date of filing: 27.07.2022
(51) Int. Cl.: H02P 25/06, B65G 54/02

(54) **MAGNETIC TRANSPORT LINE DRIVING SYSTEM, MAGNETIC TRANSPORT LINE, AND MAGNETIC TRANSPORT LINE DRIVING METHOD**

(30) Priority: 02.09.2021 CN 202111025731
(71) Applicant: Agilebot Robotics Co., Ltd, Shanghai 201702 (CN)
(72) Inventor: QIAN, Jin, Shanghai 201702 (CN); LI, Ruiqin, Shanghai 201702 (CN); WANG, Qichao, Shanghai 201702 (CN); HU, Yuejin, Shanghai 201702 (CN)
(74) Representative: V.O.
(86) International application number: PCT/CN2022/108201
(87) International publication number: WO 2023/029825

(57) **Abstract**

The present invention provides a magnetic transport line driving system, a magnetic transport line, and a control method for a magnetic transport line driving system, for use in driving an actuating mechanism of a magnetic transport line according to an instruction, the actuating mechanism comprising multiple motor stators and at least one motor mover. The magnetic transport line driving system comprises: a motion control unit, used for generating a driving instruction according to an instruction; multiple position sensing units, of which the number corresponds to that of motor stators, used for detecting quantity information and position information of motor movers; a motor control unit, used for calculating quantity information and address information of effective shaft according to the driving instruction, and the quantity information and position information of the motor movers, generating a motor stator selection instruction for selecting a specified motor stator, and generating an inversion setting instruction for generating a specified driving current; and multiple motor driving units, of which the number corresponds to that of the motor stators, used for generating and providing a driving current to a corresponding motor stator according to the motor stator selection instruction and the inversion setting instruction, and driving the motor stator to move according to the instruction.

## Description

### Technical field

The present invention is in the field of automatic transport lines, particularly magnetic transport line driving systems, and more particularly relates to a magnetic transport line driving system, a magnetic transport line, and a magnetic transport line driving method.

### Background of the invention

With the continuous development of manufacturing technology, automatic transport line technology is widely applied in automated production lines in various industries including manufacturing, packaging, assembly, and printing. Over time, it has given rise to various forms of transport lines. Among them, magnetic transport lines, compared to traditional transport solutions such as belt transport lines, roller transport lines, and chain transport lines, stand out due to their non-contact transport mode, allowing for higher transport speeds and system flexibility.

Magnetic transport lines typically include an actuating mechanism that operates under the drive of the driving system and a driving system to achieve automatic transport. In existing magnetic transport lines, the predominant actuating mechanism utilized is the linear motor, where the motor mover is composed of a coil (relatively short), and the motor stator (relatively long) is composed of alternately arranged permanent magnets. Due to the nature of linear motors in these technical solutions, the motor mover needs to be powered through wires supplying the coils, requiring trailing cables. This limitation poses practical challenges in practical applications. Consequently, the industry has also developed an actuating mechanism configuration consisting of coil stators and permanent magnet movers, each motor stator contains a UVW three-phase windings, which are connected in a Y-shaped configuration, similar to traditional three-phase servo motors, with discontinuity between the motors.

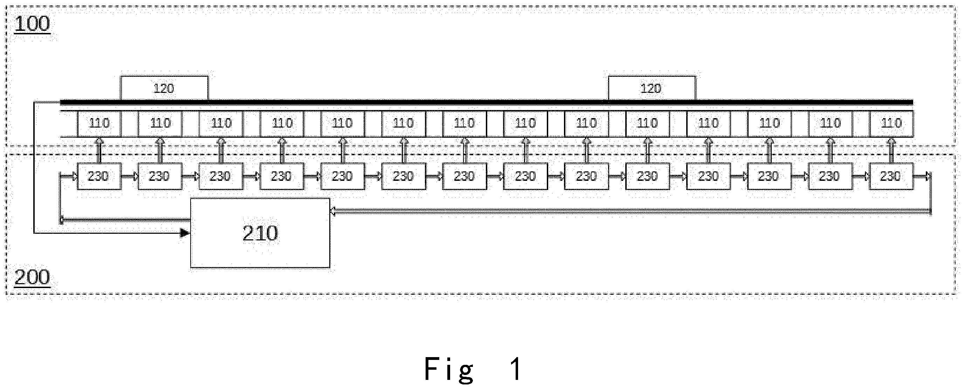

As shown in Figure 1, the prior art magnetic transport line includes an actuating mechanism 100 and a driving system 200. The actuating mechanism 100 typically includes multiple motor stators 110 and at least one motor mover 120. The driving system 200 typically includes multiple motor driving units 230 and a motion control unit 210. The motor driving unit 230 corresponds to each motor stator 110 and generates a suitable magnetic field to drive the motor mover moved according to the position of the motor mover 120. The motor driving unit 230 employs a servo driver, from the perspective of traditional servo motors, the motor driving unit and the corresponding motor stator constitute a complete motor, also referred to as a motor shaft. The motion control unit 210 sends position and speed instruction to the servo motor driving unit based on the received instruction. In other embodiments, position sensing (not shown in the figure) may be further included, usually a grating ruler or a magnetic grating ruler, for detecting the position of each mover on the transport line.

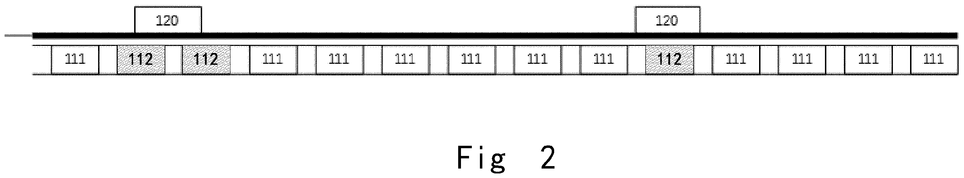

In magnetic transport lines, the number of motor shafts is usually particularly large, while the number of motor movers is limited. As shown in Figure 2, when the corresponding motor stator 110 in the actuating mechanism 100 does not have any motor mover 120 passing through, the motor stator 110 does not affect the movement of the motor mover 120, and no calculation or communication is required. At this time, the corresponding motor shaft is called the ineffective shaft 112, and vice versa called the effective shaft 111. As the motor mover 120 moves, the states of the effective and ineffective shafts of the motor stator 110 are dynamically changing. At the same time, within the actuating mechanism, the proportion of ineffective shafts is very high

This also leads to the unsatisfactory performance of existing magnetic transport line schemes in practical applications, mainly due to the following technical issues:
1. In a magnetic transport line, the size of an individual motor cannot be particularly large, and the distance cannot be too extensive, otherwise the accuracy will reduced. In practice, existing magnetic transport lines typically require 12 or more motors per meter, and to enable independent movement of motor movers within the magnetic transport system, each motor requires an independent servo driver. Therefore, the existing design requires a large number of servo driving units, making the overall circuit of the magnetic transport lines complex and leading to high system costs.
2. To generate an appropriate magnetic field to drive the movement of motor movers, the servo driving unit needs to receive information such as the position, speed, acceleration, etc.. of the motor mover. Through calculation, it then outputs the corresponding shaft for driving. Therefore, the servo driving units typically undertake major functions such as communication, calculation, waveform generation, and power driving. Additionally, due to the high hardware requirements for real-time calculation and communication of motor information, existing designs often employ high-performance DSPs or large-capacity FPGAs to reduce system latency and enhance response speed, further increasing the overall system costs.

### Summary of the Invention

Due to the aforementioned technical problems in the practical application of the magnetic transport line driving system in the existing solution, the present invention aims to provide a magnetic transport line drive system and a method thereof to address the above-mentioned technical problems in the existing solutions, thereby reducing system latency, improving response speed, decreasing the complexity of the driving system wiring, and under the condition of effectively controlling hardware requirements and costs of the magnetic transport line driving system, the system structure has been simplified, and the efficiency and reliability of the system have been improved.

The technical solution of the magnetic transport line driving system in present invention specifically comprises:
A magnetic transport line driving system, used for driving an actuating mechanism of a magnetic transport line according to an instruction, the actuating mechanism comprising multiple motor stators and at least one motor mover, the magnetic transport line driving system comprises:
a motion control unit, used for generating a driving instruction according to an instruction;
multiple position sensing units, of which the number corresponds to that of motor stators, used for detecting quantity information and position information of motor movers;
a motor control unit, used for calculating quantity information and address information of effective shafts according to the driving instruction, the quantity information and position information of the motor movers, generating a motor stator selection instruction for selecting a specified motor stator, and generating an inversion setting instruction for generating a specified driving current;
and multiple motor driving units, of which the number corresponds to that of the motor stators, used for generating and providing a driving current to the corresponding motor stator according to the motor stator selection instruction and the inversion setting instruction.

Preferably, the motor driving unit comprises:
a driving communication module, used for transmitting data between the motor driving unit and the outside;
a waveform generation module, used for generating an inversion control waveform according to the inversion setting instruction; and
a power driving inversion module, generating and providing driving current for the specified motor stator according to the inversion control waveform_{∘}

Preferably, the motor driving unit further comprises:
a collection module, used for collecting current information, voltage information, and temperature information of each phase in the motor stator, and feedback to the motor control unit.

Preferably, the motor driving unit further comprises:
a fault processing module, which determines whether there is a fault that affects the operation of the magnetic transport line based on the speed information and position information of the motor mover in the magnetic transport line, as well as the current information of each phase of the motor stator, and outputting a shutdown instruction to the power driving inversion module when the fault occurs.

Preferably, the motor control unit comprises:
a first communication module, used for transmitting data between the motor control unit and the motor driving unit, and/or the position sensing unit;
a second communication module, used for transmitting data between the motor control unit and the motion control unit;
an effective shaft management module, used for calculating the quantity information and address information of the effective shafts according to the quantity information and position information of the motor movers, and generating the motor stator selection instruction; and
at least one motor computing module, used for generating and outputting the inversion setting instruction to the motor driving unit according to the driving instruction, the motor stator selection instruction, and the current information of each phase in the motor stator.

Preferably, the motor control unit further comprises:
a computing resource scheduling and allocating module, used for selecting one or more motor computing modules according to the motor stator selection instruction, so that the selected motor computing module completes the calculation;
a preservation and distribution module, used for preserving and distributing the calculation result to the first communication module.

Preferably, the motion control unit comprises
a program execution module, used for generating the driving instruction according to the instruction; and
a collision detection module, used for determining whether the driving instruction will cause a collision of the motor movers, in the case where the determination result is negative, the driving instruction is output to the motor control unit, and in the case where the determination result is positive, it waits until the determination result is negative before outputting the driving instruction.

Preferably, multiple loops formed by connecting multiple position sensing units in series in parallel, as well as multiple loops formed by connecting multiple motor driving units in series in parallel in the magnetic transport line driving system.

Preferably, the magnetic transport line driving system further comprises:
a swapping control unit, used for transmitting data between the motor control unit and the position sensing unit, and/or the motor driving unit on each loop based on the motor stator selection instruction

The present invention also provides a magnetic transport line, which comprises an actuating mechanism, includes multiple motor stators, and at least one motor mover, wherein the magnetic transport line further comprises a magnetic transport line driving system as claimed in any one of the preceding claims.

The present invention also provides a control method for a magnetic transport line driving system, controlled based on the effective shaft, used to drive the actuating mechanism of the magnetic transport line according to the instruction, the actuating mechanism comprises multiple motor stators and at least one motor mover,
wherein the control method comprises:
driving instruction generating step, generating driving instruction according to the instruction;
motor mover detection step, acquiring quantity information, position information of the motor mover;
effective shaft address calculation step, calculating quantity information and address information of effective shafts based on the quantity information and position information of the motor mover;
motor stator selection step, generating a motor stator selection instruction according to the address information of effective shafts;
control loop calculation step, calculating the position loop, the speed loop, and the current loop, respectively, based on the position information of the motor mover, the phase current information of the motor stator, and the inversion setting instruction of the previous cycle, to generate an inversion setting instruction.
driving current generation step, storing the inversion setting instruction, selecting the corresponding motor stator according to the motor stator selection instruction, and generating the driving current for the motor stator; and
repeating the above steps to form a closed-loop control of the motor mover.

Preferably, the control method further comprises:
collision detection step, determining whether the driving instruction will cause a collision of the motor movers, in case the result of the determination is negative, the driving instruction is outputted, and in the case where the determination result is positive, it waits until the determination result is negative before outputting the driving instruction.

Preferably, the control method further comprises:
computing resource scheduling step, allocating the required computing resource for the control loop calculation step based on the motor stator selection instruction.

By applying the magnetic transport line driving system, the magnetic transport line, and the magnetic transport line driving method provided by the present invention, it is possible to address the problems existing in the current technology from the source and bring the following advantages:
Firstly, the magnetic transport line driving system, the magnetic transport line, and the magnetic transport line driving method provided by the present invention simplify the largest number of motor driving units on a large scale by centralizing calculations in the motor control unit, thereby greatly reducing costs;
Secondly, the magnetic transport line driving system, the magnetic transport line, and the magnetic transport line driving method provided by the present invention achieve centralized computation by concentrating calculations in the motor control unit. This eliminates the need for complex calculations in the motor driving unit, significantly reducing the number of chips and other electronic components required for the unit, which simultaneously reduces costs while leading to an improvement in reliability.
Thirdly, the magnetic transport line driving system, the magnetic transport line, and the magnetic transport line driving method provided by the present invention enhance system scalability without introducing latency in the system by incorporating a computing resource scheduling and allocating module, as well as a swapping control unit, ensuring that the communication latency from the motor control unit to each motor driving unit is less than the control cycle and supporting multiple loops.

For those familiar with the technical field of the invention, after reviewing the following sections in conjunction with the drawings, these and other objectives and advantages will become more apparent.

### Description of drawings

The above invention content and embodiment of the present invention will be better understood in conjunction with the accompanying drawings. It should be noted that the accompanying drawings are only examples of the claimed invention. In the drawings, the same reference numerals represent identical or similar elements.
FIG. 1 is a schematic structural diagram of the magnetic transport line driving system in the prior art.
Fig. 2 is a schematic diagram of the effective shaft and the ineffective shaft of the magnetic transport line driving system.
Fig. 3 is a schematic structural diagram of a magnetic transport line driving system of an embodiment in the present invention.
Fig. 4 is a schematic structural diagram of a motor driving unit of an embodiment of the magnetic transport line driving system in the present invention.
FIG. 5 is a schematic structural diagram of a motor control unit of an embodiment of the magnetic transport line driving system in the present invention.
FIG. 6 is a schematic structural diagram of a motion control unit of an embodiment of the magnetic transport line driving system in the present invention.
FIG. 7 is a schematic diagram of a partial structure of an embodiment of the magnetic transport line driving system in the present invention.
FIG. 8 is a schematic flowchart of an embodiment of a control method of the magnetic transport line driving system in the present invention.

### The reference signs are as follows:

100. actuating mechanism
110. motor stator
111. effective shaft
111. ineffective shaft
120. motor mover
200. driving system
210. motion control unit
211. program execution module
212. collision detection module
213. motor stator management module
220. motor control unit
221. first communication module
222. second communication module
223. effective shaft management module
224. motor computing module
225. computing resource scheduling and allocating module
226. preservation and distribution module
230. motor driving unit
231. driving communication module
232. waveform generation module
233. power driving inversion module
234. collection module
235. fault processing module
236. power management module
240. position sensing unit
250. swapping control unit

### Detailed description of the embodiments

The detailed features and advantages of the present invention are described in detail in the specific embodiment methods below, the contents of which are sufficient to enable any person skilled in the art to understand and practice the teachings of the present invention. Moreover, based on the disclosure in the specification, the claims, and the accompanying drawings of the present invention, those skilled in the art can readily understand the objectives and advantages associated with the present invention.

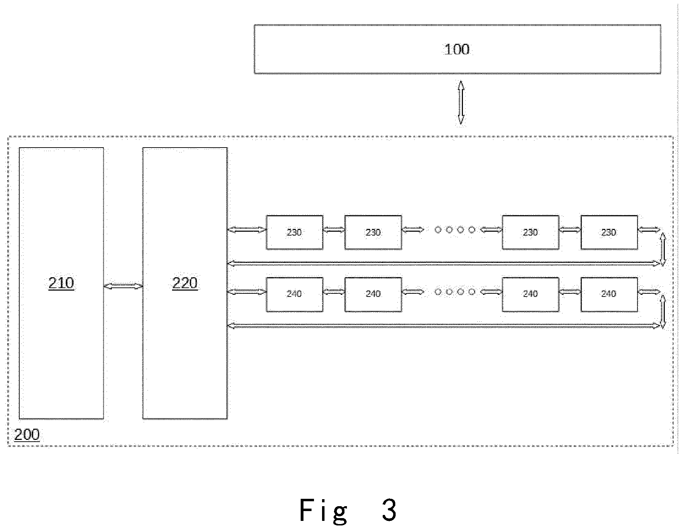

Fig. 3 to 6 illustrate a preferred embodiment of the magnetic transport line driving system in the present invention.

Therein, Fig. 3 illustrates a block schematic diagram of the magnetic transport line driving system in the present invention.

A magnetic transport line driving system 200 is provided for driving an actuating mechanism 100 of the magnetic transport line according to the instruction, the magnetic transport line driving system comprises:
A motion control unit 210 generates driving instruction based on the instruction.
Multiple position sensing units 240, which correspond to the number of the motor stator 110, for detecting the quantity information and position information of the motor mover 120. In one embodiment, the position sensing units can be a grating ruler or a magnetic grating ruler.
A motor control unit 220 calculates the quantity information and position information of the effective shaft based on the driving instruction and the quantity and position information of the motor mover 120, generates the motor stator selection instruction for selecting the specified motor stator 110, and the inversion setting instruction for generating the specified driving current; and
multiple motor driving units 230, corresponding to the number of motor stator 110, generate and provide driving current to the corresponding motor stator 110 based on the motor stator selection instruction and inversion setting instruction.
In the whole system, the structure of the motor driving unit 230 with the largest quantity is significantly simplified and costs are greatly reduced by centralizing the scheduling and execution of calculation tasks in the motor control unit.

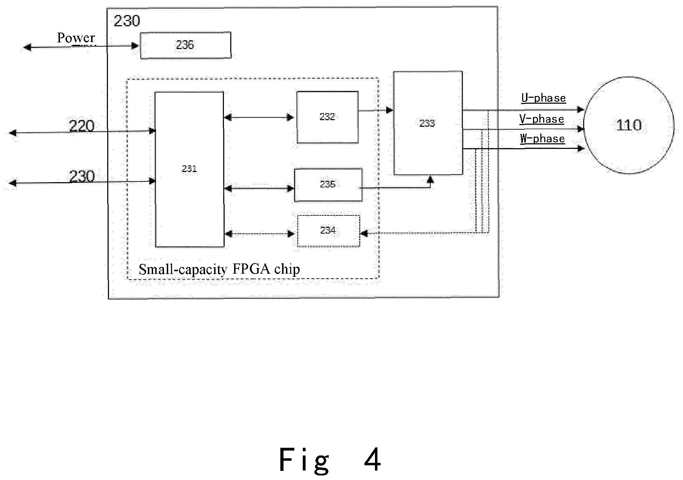

Fig. 4 illustrates a schematic structural diagram of a motor driving unit 230 of an embodiment of the magnetic transport line driving system in the present invention, comprising:
A drive communication module 231, for transmitting data between the motor driving unit 230 and the outside.

In one embodiment, data transmission includes data transmission between multiple motor driving unit 230 and data transmission between the motor driving unit 230 and the motor control unit 220. In one embodiment, data transmission occurs bidirectionally through Ethernet communication and may also utilize other means such as optical fiber.

In one embodiment, the ports of the drive communication module 231 can be configured with one or more network ports or optical ports, enabling multiple motor driving units 230 to be connected in series by forming mutual interconnections.

Since the communication of the drive communication module 231 only includes input: 1) inversion setting 2) system control, output: 1) current and state feedback. The communication cycle is set to the calculation cycle of the current loop, which, in one embodiment, is 50 microseconds. Therefore, the communication format of the motor driving unit is simple, and the intervals are very short, contributing to enhanced system reliability and fault detection characteristics.

The waveform generation module 232 generates an inversion control waveform based on inversion setting instruction. In one embodiment, the inversion control waveform is SPWM waveform.

The power driving inversion module 233 generates and provides driving current to the specified motor stator 110 based on the inversion control waveform.

In one embodiment, the motor driving unit 230 further comprises a collection module 234 for collecting current information, voltage information, and temperature information of each phase in the motor stator 110 and providing feedback to the motor control unit 220.

In one embodiment, the motor driving unit 230 further comprises a fault processing module 235, which determines whether there is a fault that affects the operation of the magnetic transport line based on the speed information, position information of the motor mover, and the current information of each phase of the motor stator in the magnetic transport line, such as over-deviation faults. In the event of a fault, the fault processing module issues a shutdown instruction to the power driving inversion module 233.

In one embodiment, the motor driving unit 230 further comprises a power management module 236 for managing all power supplies within the motor driving unit 230, including internal modules and power driving power.

In one embodiment, the drive communication module 231, waveform generation module 232, collection module 234, and fault processing module 235 can be integrated into one main control chip. In one embodiment, the main control chip is a small-capacity FPGA chip.

In one embodiment, multiple motor driving units 230 can be integrated onto a single PCB board, and the cost and system complexity can be further reduced by sharing the power management module 236 and the drive communication module 231.

Due to the absence of complex calculations, the motor driving unit in the present invention does not require the use of expensive DSP and large-capacity FPGA in existing technical solutions. The number of chips and other electronic components is also significantly reduced, resulting in both cost reduction and increased reliability.

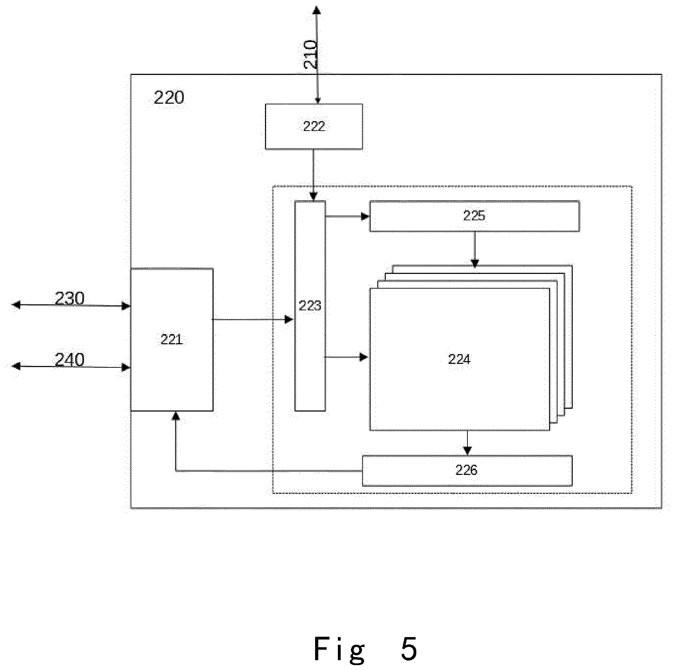

Fig. 5 illustrates a schematic structural diagram of a motor control unit 220 of an embodiment of the magnetic transport line driving system in the present invention, comprising:
a first communication module 221 for transmitting data between the motor control unit 220 and the motor driving unit 230 and/or the position sensing unit 240;
a second communication module 222 for transmitting data between the motor control unit 220 and the motion control unit 210;
an effective shaft management module 223 calculates the quantity information and position information of the effective shaft based on the quantity information and position information of the motor mover 120 provided by the position sensing unit 240, and generates motor stator selection instruction;

At least one motor computing module 224 generates and outputs an inversion setting instruction to the motor driving unit 230 based on the driving instruction, motor stator selection instruction, and the current information of each phase in the motor stator 110 provided by the motor driving unit 230.

In one embodiment, the motor computing module 224 can also perform compensation calculations for the disturbance of the magnetic transport line, such as static friction force, dynamic friction force, cogging force, and the like. In one embodiment, the motor control unit 220 further comprises:
A computing resource scheduling and allocating module 225 selects one or more motor computing modules 224 based on the motor stator selection instruction so that the selected motor computing module 224 completes the calculation; by employing the computing resource scheduling and allocating module 225, time-division multiplexing of the motor computing module 224 can be achieved. For example, One control cycle can accomplish calculations for 16 effective shafts.

A preservation and distribution module 226 preserves and distributes the calculation results to the first communication module 221.

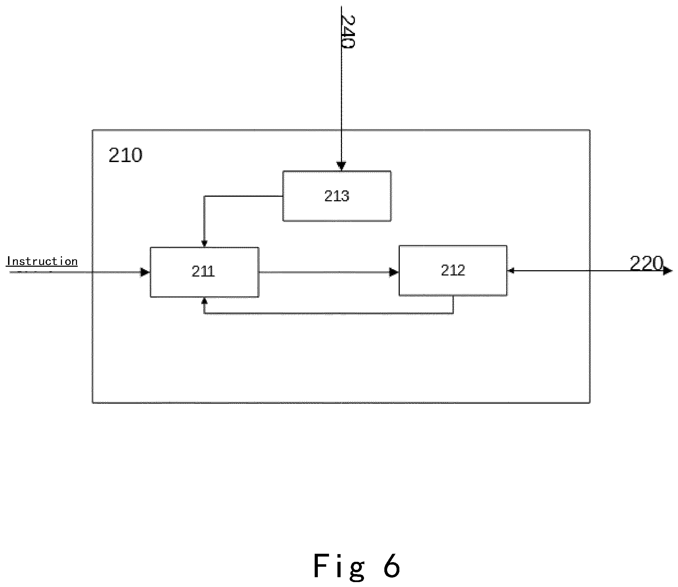

Fig. 6 illustrates a schematic structural diagram of a motion control unit 210 of an embodiment of the magnetic transport line driving system in the present invention, comprising:
A program execution module 211 for generating driving instruction based on the instruction. In one embodiment, the instruction may be a program instruction output from a user or other upper-level device.

A collision detection module 212 for determining whether the driving instruction will cause a collision of the motor movers 120 based on the driving instruction and the position information of the motor mover 120 reported by the motor control unit 220, in the case where the determination result is negative, the driving instruction is output to the motor control unit, and in the case where the determination result is positive, it waits until the determination result is negative before outputting the driving instruction.

In one embodiment, the motion control unit 210 further comprises:
A motor stator management module 213 for managing the motor stator 110 of the system. When external motor stators are added, they provide feedback to the program execution module, allocate resources, and instruct programs accordingly. Similarly, when internal motor stators exit the system, it offers feedback to the program execution module, facilitating the recovery and reallocation of resource and program instruction.

In one embodiment, the motion control unit 210 and the motor control unit 220 can be integrated into one controller.

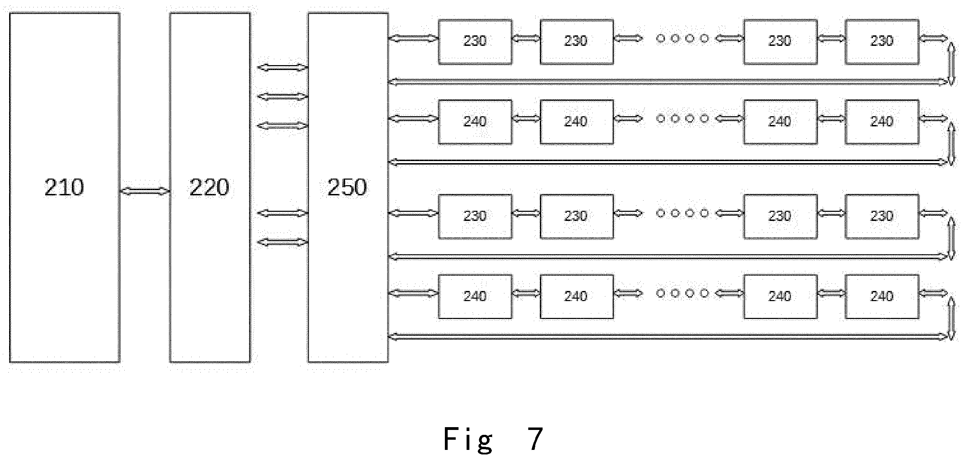

Fig. 7 illustrates another embodiment of the magnetic transport line driving system in the present invention,
Among them, each motor driving unit 230 and position sensor 240 include a superior communication port and a subordinate communication port (Ethernet or optical fiber), which form a loop. The motor control unit 220 sends communication packets with enumeration instruction through the upper-level communication port, initiating the enumeration of addresses. The first motor driving unit 230/position sensor 240 has the address 1, the next one is 2, and so forth. This continues until the last motor driving unit 230/position sensor 240 is reached, at which point the information is returned to the motor control unit 220.

Due to frequent communication in this system, the communication cycle must be shorter than the control cycle. In the case of a series connection forming a loop, each passage of a data packet through one motor driving unit introduces a certain delay. To avoid an excessively large absolute delay, when the number of motor shafts is significant, for instance, exceeding 80 motor shafts, several loops can be added. This ensures that the communication delay from the motor driving unit 230 and position sensor 240 to each motor is less than the control cycle, according to another embodiment of the present invention.

In one embodiment, all loops in the system require unified addressing, and the addresses on each loop are continuous. The address ranges of different loops are different, and each loop, that is, the address of each motor shaft on the system, is unique. For example:

| Loop sequence number | Address range |
|---|---|
| Loop 1 | 1-80 |
| Loop 2 | 81-160 |
| Loop 3 | 161-240 |

If there are too many loops, according to another embodiment of the present invention, the magnetic transport line driving system may also comprise:
a swapping control unit 250 for transmitting data between the motor control unit 220 and the position sensing unit 240 and/or the motor driving unit 230 on each loop based on motor stator selection instruction. The swapping control unit 250 recognizes the address information of the packet header and sends the packet to the corresponding motor driving unit 230 and position sensor 240 on the loop. The data packets returned by the corresponding loop can also be returned to the motor control unit 220 through the fastest channel.

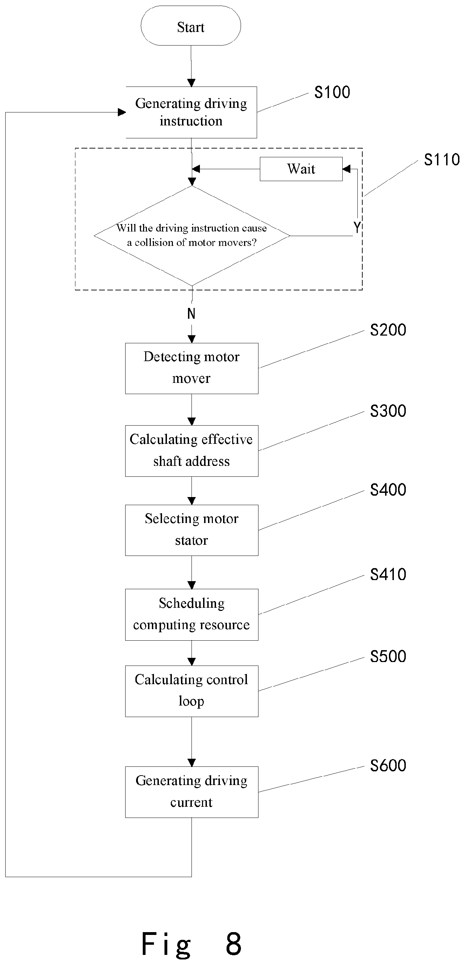

Fig. 8 illustrates a schematic flowchart of a control method of the magnetic transport line driving system in the present invention.

The control methods comprise:
step S 100, the drive instruction generation step, the motion control unit 210 generates driving instruction based on user or other external instructions.

In one embodiment, step S100 further comprises step S 110, the collision detection step, the motion control unit 210 determining whether the driving instruction will cause a collision of the motor movers, in the case where the determination result is negative, the driving instruction is outputted, and in the case where the determination result is positive, it waits until the determination result is negative before outputting the driving instruction.

Step S200, the motor mover detection step, the position sensing unit 240 obtains the quantity information and position information of the motor mover.

Step S300, effective shaft address calculation step, motor control unit 220 calculates the quantity information and address information of effective shafts based on the quantity information and position information of the motor mover.

Step S400, motor stator selection step, the motor control unit 220 generates a motor stator selection instruction based on the address information of the effective shaft;

In one embodiment, step S400 further comprises step S410, the computing resource scheduling step, the motor control unit 220 allocates required computing resource for the control loop calculation step based on motor stator selection instruction.

Step S500, the control loop calculation step, the motor control unit 220 completes the calculation of the position loop, speed loop, and current loop respectively based on the position information of the motor mover, the current information of each phase of the motor stator, and the inversion setting instruction of the previous cycle. Subsequently, it generates the inversion setting instruction.

In one embodiment, in the calculation of the position loop, speed loop, and current loop mentioned above, the outermost loop is the position loop, which receives position instruction, compensation, and position feedback, and outputs speed instruction; The middle is the speed loop, which receives speed instruction, compensation, and speed feedback from the position loop, and outputs current instruction; and the innermost is the current loop, which uses FOC (Field Oriented Control) control to receive current instruction, compensation, and current feedback, ultimately providing the inversion instruction directly.

Step S600, driving current generation step, the motor control unit 220 stores the inversion setting instruction and selects the corresponding motor stator according to the motor stator selection instruction. The corresponding motor driving unit 230 generates the driving current for the motor stator.

In one embodiment, the motor driving unit 230 simultaneously feeds back the actual motor current to the current loop, and the angular displacement or linear position generated by the motor rotation is fed back to the speed loop and position loop.

Repeating the above steps to form a closed-loop control of the motor mover to achieve precise position and speed control.

A preferred embodiment of the magnetic transport line provided by the present invention comprises:
A magnetic transport line with a length of 5 meters, consists of 16 motor shafts per meter, with three movers moving reciprocally along the magnetic transport line. Therefore, the actuating mechanism of the magnetic transport line includes 80 motor stators and 3 motor movers, with a maximum effective shaft count of 10, approximately 12.5% of the total shaft count.

The driving system comprises:
1) 80 magnetic position sensors
2) 80 motor driving units

Wherein, each motor driving unit includes a drive communication module, a waveform generation module, a power driving inversion module, and a collection module. All related control functions can be completed using a small-capacity FPGA (9K equivalent logic unit).

Every 4 motor driving units are integrated into one motor drive board, with a total of 20 motor drive boards.

### 3) One integrated drive control motion controller, each motion controller integrates one motion control unit and one motor control unit.

Wherein, the motion control unit comprises a program execution module;

The motor control unit includes a first communication module, a second communication module, an effective shaft management module, a motor computing module, a computing resource scheduling and allocating module, and a preservation and distribution module.

The operation control steps of the driving system adopt closed-loop control, as follows:
During power-on initialization, the system defaults to no motor mover present.

The program execution module generates driving instruction.

The magnetic position sensor periodically detects the position of the motor mover and transmits it to the motor control unit through the first communication module.

The collection module periodically detects the current of the motor stator and transmits it to the motor control unit through the first communication module.

After obtaining relevant information (position, speed, current), the effective shaft management module calculates the position of three effective shafts of the motor and forms a motor stator selection instruction.

The computing resource scheduling and allocating module allocates the effective shaft calculation of the mover to the corresponding computing resource.

Control-related calculations (including position loop, speed loop, and current loop) are completed by the motor computing module, and the results are output to the preservation and distribution module.

The preservation and distribution module preserves the results of this test and outputs them to the motor driving unit in sequence according to the address.

The data packets are sequentially transmitted to the corresponding address of the motor driving unit and enter the power driving inversion module, generating the corresponding three-phase current.

Repeating the previous process to achieve a closed-loop control effect on the motor mover.

From the above embodiments, it can be seen that the magnetic transport line driving system, magnetic transport line, and the control methods of the magnetic transport line driving system provided by the present invention can solve the problems existing in the prior art from the source; by concentrating the computation in the motor control unit, the largest number of motor driving units is significantly simplified, leading to substantial cost reductions; By eliminating the need for complex calculations in the motor driving unit, the number of chips and other electronic components required for the unit itself is greatly reduced, thereby enhancing reliability while reducing costs; enhancing system scalability without introducing delay in the system by incorporating a computing resource scheduling and allocating module as well as a swapping control unit, ensuring that the communication latency from the motor control unit to each motor driving unit is less than the control cycle and supporting multiple loops.

The terms and expressions used here are employed for descriptive purposes, and the present invention should not be limited to these terms and expressions. The use of these terms and expressions does not imply the exclusion of any equivalent features of the concepts and descriptions (or portions thereof). It should be recognized that various modifications may be included within the scope of the claims. Other modifications, changes, and substitutions are also possible. Accordingly, the claims should be construed to encompass all such equivalents.

Similarly, it should be noted that while the present invention has been described concerning specific embodiments, those skilled in the art should recognize that the above embodiments are merely illustrative of the present invention. Various equivalent changes or substitutions can be made without departing from the spirit of the invention. Therefore, any modifications or variations of the above embodiments within the essential spirit of the invention fall within the scope of the claims of this application.

## Claims

1. A magnetic transport line driving system, used for driving an actuating mechanism of a magnetic transport line according to an instruction, the actuating mechanism comprising multiple motor stators and at least one motor mover,
wherein the magnetic transport line driving system comprises:
a motion control unit, used for generating a driving instruction according to the instruction;
multiple position sensing units, of which the number corresponds to that of motor stators, used for detecting quantity information and position information of motor movers;
a motor control unit, used for calculating quantity information and address information of effective shafts according to the driving instruction, the quantity information and position information of the motor movers, generating a motor stator selection instruction for selecting a specified motor stator, and generating an inversion setting instruction for generating a specified driving current; and
multiple motor driving units, of which the number corresponds to that of the motor stators, used for generating and providing a driving current to the corresponding motor stator according to the motor stator selection instruction and the inversion setting instruction.

2. The magnetic transport line driving system as claimed in claim 1, wherein the motor driving unit comprises:
a driving communication module, used for transmitting data between the motor driving unit and the outside;
a waveform generation module, used for generating an inversion control waveform according to the inversion setting instruction; and
a power driving inversion module, generating and providing driving current for the specified motor stator according to the inversion control waveform_{∘}

3. The magnetic transport line driving system as claimed in claim 2, wherein the motor driving unit further comprises:
a collection module, used for collecting current information, voltage information, and temperature information of each phase in the motor stator, and feedback to the motor control unit.

4. The magnetic transport line driving system as claimed in claim 2, wherein the motor driving unit further comprises:
a fault processing module, which determines whether there is a fault that affects the operation of the magnetic transport line based on the speed information and position information of the motor mover, as well as the current information of each phase of the motor stator in the magnetic transport line, and outputting a shutdown instruction to the power driving inversion module when the fault occurs.

5. The magnetic transport line driving system as claimed in any one of claims 1 to 4, wherein the motor control unit further comprises:
a first communication module, used for transmitting data between the motor control unit and the motor driving unit, and/or the position sensing unit;
a second communication module, used for transmitting data between the motor control unit and the motion control unit;
an effective shaft management module, used for calculating the quantity information and address information of the effective shafts according to the quantity information and position information of the motor movers, and generating the motor stator selection instruction; and
at least one motor computing module, used for generating and outputting the inversion setting instruction to the motor driving unit according to the driving instruction, the motor stator selection instruction, and the current information of each phase in the motor stator.

6. The magnetic transport line driving system as claimed in claim 5, wherein the motor control unit further comprises:
a computing resource scheduling and allocating module, used for selecting one or more motor computing modules according to the motor stator selection instruction, so that the selected motor computing module completes the calculation; and
a preservation and distribution module, used for preserving and distributing the calculation result to the first communication module.

7. The magnetic transport line driving system as claimed in any one of claims 1 to 4, wherein the motion control unit comprises:
a program execution module, used for generating the driving instruction according to the instruction; and
a collision detection module, used for determining whether the driving instruction will cause a collision of the motor movers, in the case where the determination result is negative, the driving instruction is output to the motor control unit, and in the case where the determination result is positive, it waits until the determination result is negative before outputting the driving instruction.

8. The magnetic transport line driving system as claimed in any one of claims 1 to 4, wherein, the magnetic transport line driving system comprises multiple loops which
formed by connecting multiple position sensing units in series in parallel, and multiple loops which formed by connecting multiple motor driving units in series in parallel.

9. The magnetic transport line driving system as claimed in claim 8, wherein the magnetic transport line driving system further comprises:
a swapping control unit, used for transmitting data between the motor control unit and the position sensing unit, and/or the motor driving unit on each loop according to the motor stator selection instruction

10. A magnetic transport line, comprises an actuating mechanism, which includes multiple motor stators and at least one motor mover, wherein the magnetic transport line further comprises a magnetic transport line driving system as claimed in any one of claims 1 to 10.

11. A control method for a magnetic transport line driving system, which is controlled based on the effective shaft, used for driving the actuating mechanism of the magnetic transport line according to the instruction, the actuating mechanism comprises multiple motor stators and at least one motor mover,
wherein the control method comprises:
driving instruction generating step, generating driving instruction according to the instruction;
motor mover detection step, acquiring quantity information, position information of the motor mover;
effective shaft address calculation step, calculating quantity information and address information of effective shafts according to the quantity information and position information of the motor mover;
motor stator selection step, generating a motor stator selection instruction according to the address information of the effective shaft;
control loop calculation step, calculating the position loop, the speed loop, and the current loop, respectively, based on the position information of the motor mover, the current information of each phase of the motor stator, and the inversion setting instruction of the previous cycle, and generating an inversion setting instruction;
driving current generation step, storing the inversion setting instruction, selecting the corresponding motor stator according to the motor stator selection instruction, and generating the driving current for the motor stator; and
repeating the above steps to form a closed-loop control of the motor mover.

12. The control method of the magnetic transport line driving system as claimed in claim 11, wherein the control method further comprises:
collision detection step after the driving instruction generating step, determining whether the driving instruction will cause a collision of the motor movers, in case the result of the determination is negative, the driving instruction is outputted, in the case where the determination result is positive, it waits until the determination result is negative before outputting the driving instruction.

13. The control method of the magnetic transport line driving system as claimed in claim 12, wherein the control method further comprises:
computing resource scheduling step after the motor stator selection step, allocating the required computing resource for the control loop calculation step according to the motor stator selection instruction.
